# EUROPEAN PATENT SPECIFICATION

(11) **EP 3 332 329 B1**
(45) Date of publication and mention of the grant of the patent: **06.11.2019**
(21) Application number: 15751002.5
(22) Date of filing: 14.08.2015
(51) Int. Cl.: G06F 12/0862

(54) **DEVICE AND METHOD FOR PREFETCHING CONTENT TO A CACHE MEMORY**
VORRICHTUNG UND VERFAHREN ZUM PREFETCHING VON INHALT IN EINEN CACHE-SPEICHER
DISPOSITIF ET PROCÉDÉ POUR RÉALISER UNE LECTURE ANTICIPÉE D'UN CONTENU AU NIVEAU D'UNE MÉMOIRE CACHE

(43) Date of publication of application: 13.06.2018
(73) Proprietor: Huawei Technologies Co., Ltd., Longgang District Shenzhen, Guangdong 518129 (CN)
(72) Inventor: KUTNAR, Andreas, S-164 40 Kista (SE); HENRIKSSON, Tomas, S-164 40 Kista (SE); BARNARD, Darren, S-164 40 Kista (SE)
(74) Representative: Pfenning, Meinig & Partner mbB
(86) International application number: PCT/EP2015/068763
(87) International publication number: WO 2017/028877

(56) References cited:
- US-A1- 2005 015 637
- US-A1- 2007 226 422

## Description

### Technical Field

The invention relates to a device for prefetching content to a cache memory. Furthermore, the invention also relates to a corresponding method. The invention also relates to hardware implementing the method according to the invention, and communication equipment comprising a device according to the invention.

### Background

Processor performance, such as e.g. general purpose processor performance, is oftentimes defined by the time it takes to execute a software program. The software program, in turn, is made up of a set of processor instructions. The instructions of the software program are executed by the processor, where it takes one or more clock cycles to execute an instruction. The processor may also be capable of executing a plurality of instructions in parallel. The actual processor performance is also dependent on the clock frequency.

Furthermore, software programs are oftentimes made up of combinations of various kinds of instructions types, such as e.g. memory operations, arithmetic and logic operations etc., where each instruction/instruction type may require a different number of clock cycles in the execution.

With regard to read/write operations in memory, such operations may require a relatively large number of clock cycles, and at least partly for this reason cache memories are oftentimes used.

A cache memory is a temporary storage for data duplication where original values are stored in a memory having a longer access time regarding reading and/or writing. Typically, the original data is expensive to fetch in terms of clock cycles due to slow memory access time in comparison to accessing the cache memory. Consequently, data can be stored in a cache memory, and when the data is stored in the cache memory, the cached copy of the data can be quickly accessed by the processor.

A cache memory is thus used by the processor to reduce the average time to access data. In comparison to a main memory where data is stored for longer periods of time, the cache memory is usually a considerably smaller, faster to access memory in which copies of a data from frequently used main memory locations can be stored for faster access by the processor. There may also be a hierarchy of cache memory levels (level 1 (L1), Level 2 (L2) etc.), where each additional level results in additional processor latency. That is, the time it takes for the processor to receive requested data will be longer for each additional level that is involved in the data request.

US 2007/0226422 A1 describes a multi-master system and a data transfer system with prefetch control. US 2005/0015637 A1 is concerned with synchronizing processors in a data processing system comprising a plurality of processors.

### Summary

An objective of the invention is to provide a solution which mitigates or solves drawbacks and problems of conventional solutions.

The above objectives are fulfilled by the subject matter of the independent claims. Further advantageous implementation forms of the invention can be found in the dependent claims. According to a first aspect of the invention, the above mentioned and other objectives are achieved by a device for a prefetch of content to a cache memory comprising:
a cache memory for storing content;
a prefetch control logic configured to receive a cache coherence invalidation message, CCIM, the CCIM indicating content to be invalidated in the cache memory and to upon receiving the CCIM generate a prefetch signal indicating that content is to be prefetched;
   wherein the cache controller is further configured to receive the prefetch signal and to, upon receiving the prefetch signal, prefetch content from a second memory to the cache memory.

The device may constitute e.g. a processor chip further comprising a processor, or any other kind of device. Processors, such as e.g. conventional general purpose Central Processing Units (CPU), Graphics Processing Units (GPU) or Digital Signal Processing units (DSP) often comprise one or more cache memories being connected to the processor in order to allow the processor fast memory access to data stored in the cache memory. For example, cache memories can often be accessed in the order of a single clock cycle, while lower level memories may require ten times as many clock cycles or more.

The cache memory is in general small in relation to other memories in the system, and hence the data to be stored in the cache memory must consist of data that is requested by a processor. Cache memories often comprises prefetch control logic that controls fetching of data to the cache memories from other memories, where the prefetch control logic predict which data that is to be stored in the cache memory. Such prediction, however, is at least in some situations very difficult to perform.

For example, the processor may request tasks to be performed by other entities, such as e.g. other processors in the system, where these other entities may report back to the requesting processor upon finishing the task. This reporting, e.g. in the form of a control message, however, merely consist of an invalidation of an associated cache line in the processor cache, and the cache line is not updated until first being polled by the processor.

With regard to the term "prefetch" this is widely used in cache memory technology and means fetching of data from another memory/cache memory to a cache memory before it is actually requested. The source from which data is fetched can be either a cache memory or any other kind of memory. When e.g. software being executed needs data that has already been prefetched, instead of waiting for the data from memory, the data can be retrieved from the cache memory and execution carry on with minimum delay.

According to the first aspect of the invention, it is provided a device that allows prefetching of such content prior to the processor polling the cache line in order to determine whether the task is finished. When a cache line is invalidated in a cache memory this is accomplished by means of a cache coherence invalidation message CCIM. Cache memories, consequently, are configured to receive cache coherence invalidation messages, where a cache coherence invalidation message CCIM invalidates content of at least one cache location of the cache memory.

According the invention, prefetch control logic of the cache memory is configured to generate a prefetch signal indicating that content is to be prefetched to the invalidated cache location. The cache controller receives the prefetch signal and prefetches content from a second memory to the cache memory. The content to be prefetched from the second memory can be a control message from an entity being different from the processor, such as another processor. The cache memory can further be exclusive to the first processor, i.e. no other entity being allowed to write in the cache memory.

The invention has the advantage that data can be prefetched prior to being requested by the processor also in situations where conventional prefetch control logic is not capable of predicting when prefetch is to be performed. The invention thereby reduces processor latency. Furthermore, the prefetch can be performed from another cache memory or any other kind of memory. In principle, the further away the memory from which the data is prefetched, the more is the processor latency reduced when prefetching according to the invention reduces cache misses.

The prefetch control logic is configured to, upon receiving the cache coherence invalidation message CCIM, check whether a prefetch trigger condition is fulfilled, by checking whether a flag bit added to the CCIM is set, and if so generate a prefetch signal indicating that content is to be prefetched. The prefetch control logic is configured to determine if the prefetch trigger condition for triggering the prefetch is fulfilled based on information in the cache coherence invalidation message. When the prefetch trigger condition is fulfilled the content related to the invalidated cache location is prefetched. The invention has the advantage that data can be prefetched prior to being requested by the processor by determining if the invalidated cache location is to be updated on the basis of information in the cache coherence invalidation message CCIM.

According to a first possible implementation form of the device according to the first aspect, the prefetch control logic is configured compare a plurality of bits of the cache coherence invalidation message CCIM with configured information in the prefetch control logic, and wherein the prefetch trigger condition is fulfilled when the plurality of bits of the CCIM corresponds to the configured information in the prefetch control logic. This has the advantage that fulfillment of the prefetch trigger condition, for example, can be determined on the basis of information stored as a combination of a plurality of bits, and where various combinations may be arranged to trigger the prefetch.

According to a second possible implementation form of the device according to the first possible implementation form, the configured information in the prefetch control logic is one or more addresses, and an address in the cache coherence invalidation message is being compared with the one or more addresses stored in the prefetch control logic. This has the advantage that e.g. the memory location being invalidated by the cache coherence invalidation message can be used as trigger for performing the prefetch, where e.g. only some addresses of the cache memory can be arranged to trigger a prefetch. The address can e.g. identify a cache line in the cache memory.

According to a third possible implementation form of the device according to the second possible implementation form, the configured information in the prefetch control logic identifies one or more global addresses, the cache coherence invalidation message identifying a global address. This has the advantage that e.g. addresses valid throughout the system, and hence not cache memory internal addresses, can be used, and one or more of these be defined as triggering a prefetch when being invalidated.

According to a fourth possible implementation form of the device according to the first aspect, the cache controller is configured to, upon receiving the prefetch signal, prefetch content for a possible later use by a processor from the second memory to the cache memory. This has the advantage that data that subsequently is requested by a processor may be ready for access already when being requested by the processor so that latency is avoided.

According to a fifth possible implementation form of the device according to the first aspect, the prefetch control logic is configured to receive a cache coherence invalidation message comprising a sideband signal, wherein the prefetch control logic is configured to determine if the prefetch trigger condition is fulfilled on the basis of the sideband signal. The sideband signal can consist of one or more bits that are added to the cache coherence invalidation message, and wherein the prefetch trigger condition is a condition regarding the value of the one or more added bits.

This has the advantage that fulfillment of the prefetch trigger condition can be determined on the basis on any suitable data that is added to the cache coherence invalidation message, or data being added to the cache coherence invalidation message. For example, a single bit can be used, one value indicating that a prefetch is to be performed and the other value that no prefetch is to be performed.

According to a sixth possible implementation form of the device according to any of the previous possible implementation forms of the first aspect the prefetch control logic is configured to, when prefetching information to the invalidated cache location wait a number of clock cycles of a processor and prefetch the content when the number of clock cycles has lapsed.

This has the advantage that a lower level memory transmitting the cache coherence invalidation message to the cache memory can be arranged to forward the cache coherence invalidation message prior to the lower level memory being updated, so that the cache memory quickly can assess whether a prefetch is to be carried out, while the actual data can be written to the lower level memory, and/or the writing be completed, after the transmission of the cache coherence invalidation message to the cache memory. The cache memory can then wait a suitable number of clock cycles to ensure that the data in the lower level memory has been updated prior to prefetching this data.

According to an senventh possible implementation form of the device according to any of the previous possible implementation forms of the first aspect, the cache controller is configured to receive from a processor a fetch signal to fetch the content for immediate use by the processor from a second memory to the cache memory. This has the advantage that the device can be arranged also for conventional fetch operations.

According to a eighth possible implementation form of the device according to the seventh possible implementation form, the cache controller is configured a lower priority is assigned to the prefetching of content to the invalidated memory location based on the cache coherence invalidation message CCIM when compared to a priority of a fetch signal received from the processor. This has the advantage that the processor will always get the requested data without unnecessary delay, so that higher prioritized operations are not delayed because of a prefetching according to the invention.

According to a second aspect of the invention it is provided a communication equipment comprising a device according to the first aspect or any of the above possible implementation forms. This has the advantage that data from e.g. another processor, e.g. also forming part of the communication equipment can be provided to a processor of a communication equipment with minimum latency.

According to a third aspect of the invention it is provided a method for a prefetch content to a cache memory comprising a plurality of memory locations for storing content;
the method comprising:
using a prefetch control logic for receiving a cache coherence invalidation message, the CCIM indicating content to be invalidated in the cache memory;
the prefetch control logic, upon receiving the CCIM, generating a prefetch signal indicating that content is to be prefetched; and
using a cache controller, configured to receive the prefetch signal, for prefetching content from a second memory to the cache memory upon receiving the prefetch signal.

The method further comprises using the prefetch control logic for determining if the a prefetch trigger condition triggering the prefetch is fulfilled based on information in the CCIM by checking whether a flag bit added to the CCIM is set; and using the cache controller for prefetching the content to the at least one cache location when the prefetch trigger condition is fulfilled.

The advantages of the third aspect are similar to the advantages of the first aspect above. Furthermore, all of the above implementation forms of the device according to the first aspect can be implemented as method steps of the method according to the third aspect.

According to one possible implementation form of the third aspect the cache memory is associated with a processor and the content to be prefetched is delivered by an entity being different from the processor. The entity being different from the processor indicates, by a CCIM, to the second memory that the content of the at least one memory location is to be invalidated. The indication is forwarded to the first cache memory from the second memory, the content is written to the second memory and the content is prefetched to the cache memory from the second memory.

This has the advantage that the entity transmitting the message can determine whether the data being invalidated by the cache coherence invalidation message should be subjected to a prefetching operation. The second entity can also have been instructed to perform such signaling e.g. when receiving a previous communication from the processor. This has the further advantage that data can be supplied e.g. from one processor to another in a straightforward manner and prior to the data being requested by the processor the data is being intended for.

### Brief description of the drawings

Fig. 1 schematically shows a processor system in which an embodiment of the invention may be utilized.
Fig. 2 shows an example of a cache memory in which an embodiment of the invention can be utilized.
Fig. 3 shows a timing diagram illustrating method steps according to the invention.
Fig. 4A discloses a first example of a cache coherence invalidation message.
Fig. 4B discloses a second example of a cache coherence invalidation message.

### Detailed description

In the following detailed description the same reference numeral will be used for corresponding features in the different drawings.

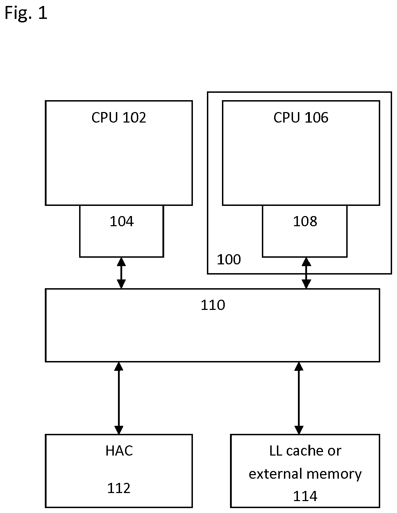

Fig. 1 shows schematically a device 100 in which an embodiment of the invention may be utilized. The device 100, may, for example, be a processor chip. According to the disclosed embodiment the processor chip comprises two processors 102, 106. According to one embodiment the processor chip comprises only one processor with cache memory. The device 100 may further be any kind of device comprising a processor, e.g. a computer, communication equipment such as a mobile telephone or any device that comprises a processor. The disclosed device 100 includes a processor 102, e.g. any suitable kind of processor, such as any conventional central processing unit (CPU) or digital signal processor (DSP) having a first associated level 1 (L1) cache memory 104. The disclosed device 100 further includes a processor 106, correspondingly having an associated L1 cache memory 108. The two processors 102, 106 further share a common second level (L2) cache memory 110. According to one embodiment, the device 100 according to the invention consists of a cache memory.

Fig. 1 further discloses a hardware controller (HAC) 112 which may represent the hardware controller of any entity being external to the processors 102, 106, for example a lower-level cache memory, an external memory or any other kind of peripheral. Fig. 1 also discloses a lower-level cache (e.g. third level cache memory) and/or external memory 114. The lower the level of memory, the further away the memory is from the processor, and thereby the longer is the access times to access the memory.

An embodiment of the invention relates in particular to data cache memories. It is to be noted, however, that processors often comprises other kinds of cache memories. For example, processors may involve an instruction cache to speed up executable instruction fetch, and a translation lookaside buffer (TLB) that is used to speed up virtual-to-physical address translation for both executable instructions and data, as is known to the person skilled in the art.

A cache memory comprises a set of entries, cache locations, where each entry can store a segment of data that is a copy of a segment of data in a main memory and/or in a lower level cache memory. Each entry has an associated address, oftentimes denoted tag, which is a representation of the identity of the segment in the lower level memory of which the entry is a copy e.g. part of the actual address. A cache memory entry is generally denoted cache line.

The use of a cache memory may significantly improve processor performance by allowing data to be fetched to the cache memory prior to being requested by the processor, thereby reducing latency. It is considerably faster to read from or write to a cache memory in comparison to reading from or writing to a main memory. When a processor needs to access data in a location in a main memory, it first issues a request to the cache memory, whereby a cache controller checks whether a copy of the requested data is stored in the cache memory. If a tag can be found that matches that of the desired segment, the segment in the cache memory is accessed instead.

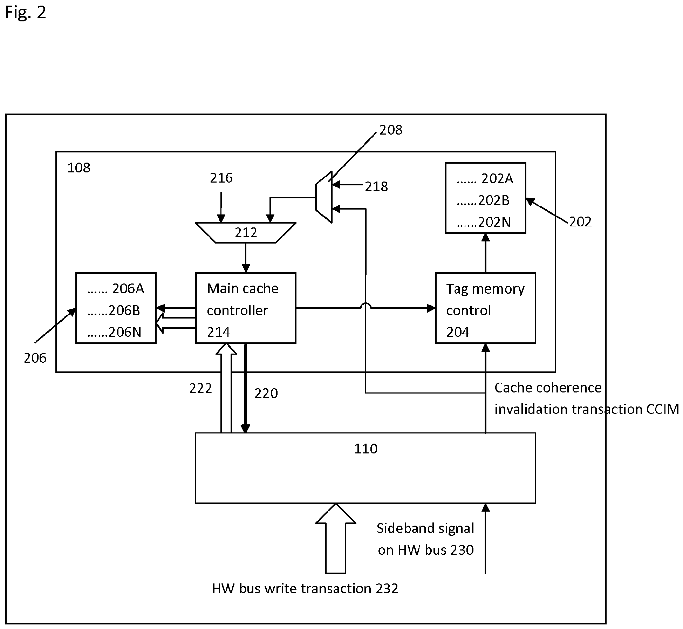

The invention may be implemented in either or both cache memories 104, 108 of fig. 1, but will be exemplified for an implementation in cache memory 108. Fig. 2 discloses the cache memory 108 more in detail. Data is transferred between lower level memory and cache memory 108 in blocks of a generally fixed size. When a cache line is copied into a cache memory from another location, a cache entry is created. The cache entry will include the copied data, stored in a data memory 206 comprising a plurality of memory locations 206A, 206B,...206N, and a representation, tag, of the corresponding lower level memory location, or at least a representation thereof. According to the disclosed embodiment the tag is stored in a tag memory 202 comprising tags 202A, 202B,...202N and corresponding location in the data memory 206.

As was mentioned, when there is a processor 106 request 216 to read from or write to a location in main memory, it is first checked by a main cache controller 214 if the required data/memory location is already present in the cache memory 108. This can be performed by checking whether the address in question is present in the tag memory 202 via tag memory control 204. If the requested memory location is present in the tag memory 202, and hence associated data being is present in a data memory 206, a read from or write to the cache memory 108 is performed instead. This situation is known as a cache hit. In the case of a cache hit, the processor 106 immediately reads or writes the data in the associated cache line in the data memory 206 and the processing of e.g. a software program may continue with minimum latency in regard of the data retrieval.

When the cache memory 108 is accessed and the tag of a requested segment is not present in the cache memory 108, i.e. the main cache controller 214 does not find the tag in the tag memory 202, a cache miss has occurred. The main cache controller 214 forwards the request to the next level memory controller. The segment being requested during a cache miss is oftentimes fetched from its lower level memory location and inserted into the cache memory to be ready for a subsequent access.

The cache memory is often limited in size, and hence a selection regarding which data to be stored in the cache memory must be made. Consequently, in the case of a cache miss, the cache memory 108 often allocates a new entry in the data memory 206 and copies in the requested data from e.g. a main memory, or lower-level cache such as, for example, the L2 cache shown in fig. 2 and storing the corresponding tag in tag memory 202. A cache miss of this kind may delay execution since the transfer of data from a lower level memory is much slower than reading from the cache memory. If the processor can continue execution while data is copied to main memory in the background latency can be reduced, otherwise a relatively large number of clock cycles may be lost in memory retrievals of this kind.

In order to obtain a system with as many cache hits as possible data that is requested by the processor should already be present in the cache memory upon the request. The selection of which data to be fetched to the cache memory is often controlled by prefetch control logic of the cache memory. In principle, there are two main ways in which prefetching can occur. The prefetching can be initiated by hardware or be initiated by software. When the prefetch mechanism is software controlled, software is designed to identify which data will be required at what point in time, and requests a prefetch of this data. Such requests are indicated by 216 in fig. 2. The main cache controller 214 is then utilized to get this data in advance by polling 220 a lower level memory, e.g. L2 memory 110 and receiving data 222 in response to the poll 220.

With regard to software controlled memory requests, i.e. requests for data is stored in memory initiated by the software being executed by the processor, data to be retrieved to the cache memory is derivable from the software itself. With regard to a hardware controlled prefetch mechanism, the hardware controlled mechanism predicts which data that is to be retrieved e.g. from a main memory prior to the data being actually requested by the processor in an attempt to keep the number of cache hits high and latency low. Hardware controlled prefetch mechanisms may be designed to monitor data access patterns and use these patterns in an attempt to predict what addresses will be requested in the future. For example, data is often accessed in a consecutive manner, that is, data being requested from consecutive memory locations or memory locations that otherwise are derivable from previous accesses. A drawback of prefetch mechanisms in general is that data may not be prefetched in time for use if the prediction is not correct, with latency as result, or be fetched but not used at all, thereby wasting valuable resources.

In addition to the desire of prefetching data stored in memory on the basis of the execution of software instructions, there are also other kinds of data that the processor may require for proper operation, and where efficient access to the data may improve processor performance.

For example, the work of the processor oftentimes relies on data from other entities. This means that there exists a desire to transport e.g. control messages and/or data to processors from other entities. Thereby processor performance is also impacted by the access to this kind of data. For example, the processor 106 may request work from processor 102 or any other hardware, e.g. associated with hardware controller 112. When the requested work is finished the result is oftentimes communicated to processor 106.

Consequently, e.g. processor 102, or any other kind of hardware entity, e.g. represented by hardware controller 112 or LL cache 114, may need to indicate completion of a job request that has been submitted by processor 106. The completion of the job request may also include, for example, a result and the message is often transmitted in the form of data being stored in a memory location.

Data of this kind is usually transferred via lower-level memories such as, e.g. the main memory or a lower-level cache memory, for example the common L2 cache memory 110 of fig. 1. It is, however, very difficult for a prefetch mechanism of an L1 cache memory to predict when data of this kind is to be prefetched to data memory 206 for use by the processor 106. Simultaneously it is highly desirable that the data is available when the processor 106 requests the data.

There exist mechanisms for reducing latency when retrieving data of this kind, but conventional solutions typically has the drawback that the receiving processor consumes many clock cycles while retrieving this message. According to conventional solutions, the retrieval of data is typically done using either an interrupt or polling mechanism. In the case of an interrupt, the processor 106 suspends the current code execution and proceeds to execute the interrupt service routine. An interrupt routine, however, in general still requires a large number of clock cycles and hence increases latency.

If retrieval of data of this kind is accomplished through the use of polling, an associated cache memory location is polled by the processor, and when data is not ready software execution may be suspended for a period of time, or alternatively some other function may be executed so that after some period of time has elapsed the memory location can be polled again to see if the desired data has been fetched. Meanwhile the prefetch mechanism may have affected the fetching of the data on the basis of the polling request. However, if the data is stored in low level memory, the fetching of data may take considerable time.

With regard to the disclosed example, the processor 102 may make the data available in the L2 cache memory 110 by a cache coherence invalidation message CCIM 230 and following data write transaction 232, and further invalidate the corresponding entry in the L1 cache memory 108. That is, it is communicated to the L1 cache memory 108 that the data in the L1 cache memory 108 is no longer valid. The L1 cache memory, however, is not updated until the processor 106 attempts to access that particular memory location, i.e. resulting in a cache miss. As explained above this introduces a latency of many cycles, and solutions of this kind imply constant L1 cache misses, and possibly a plurality of cache misses for a same request if data is stored in a slow memory.

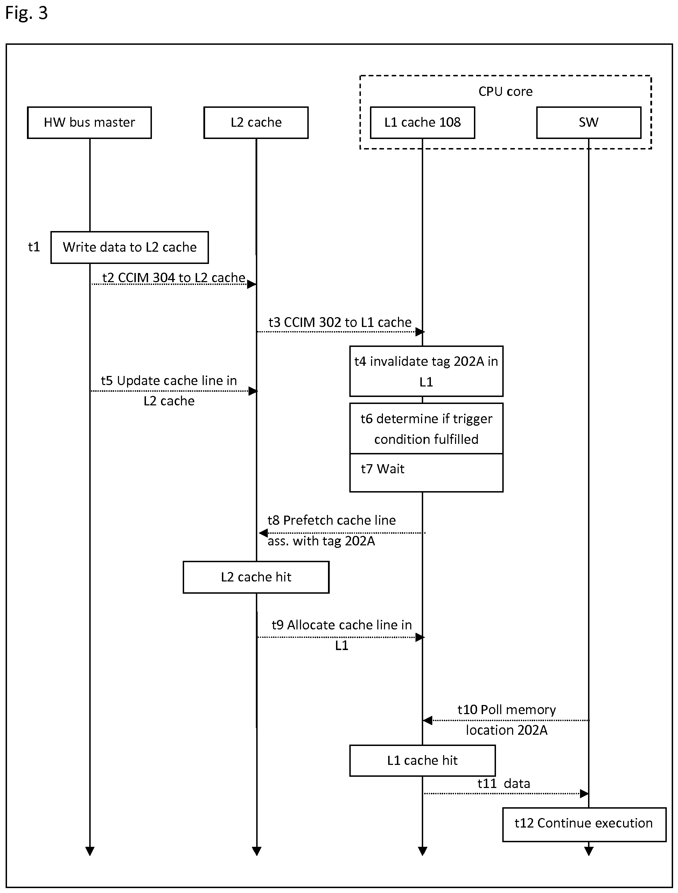

The invention provides a solution that reduces drawbacks of conventional solutions. An example of a timing diagram illustrating a method according to the invention is exemplified in fig 3. Fig. 3 discloses shows common time lines for a hardware bus master of processor 102, L2 cache memory 110, L1 cache memory 108 of processor 106, and software executed by processor 106. According to the disclosed example, a message, e.g. a control message, is to be communicated from processor 102 to processor 106.

At step t1 there is a message associated with memory tag 202A, which corresponds to data in any suitable memory location 206A, 206B,...,206N in data memory 206, e.g. memory location 206A, to be communicated from processor 102 to processor 106. Processor 102, or e.g. a hardware bus master associated with processor 102, therefore, initiates a writing of data to be communicated to processor 106, at step t2, by a cache coherence invalidation message CCIM 304 to L2 cache 310 invalidating a corresponding cache line of the L2 cache. The data associated with memory tag 202A is first to be written to the L2 cache memory 110 prior to being accessible to the L1 cache memory 108 and can, for example, consist of data in response to a previous request from processor 106.

At step t3, the L2 cache memory 110 notifies the L1 cache memory 108 about the request for writing data into the L2 cache memory 110. This is accomplished by similarly transmitting a cache coherence invalidation message CCIM 302, e.g. relaying the received cache coherence invalidation message CCIM 304. The L1 cache memory 108, upon reception of the cache coherence invalidation message CCIM 302 invalidates, step t4, the corresponding cache line, i.e. in this case data associated with memory tag 202A of the L1 cache memory 108. That is, data stored in, in this example, the corresponding memory location 206A in the L1 cache memory 108 is no longer considered valid. This means that should the processor 106 access this particular memory tag 202A following the cache coherence invalidation message CCIM 302, the requested data must be fetched from the updated lower level L2 memory location.

In general, in a shared memory system, such as the shared memory multiprocessor system of fig. 1 where there is a separate cache memory for each processor and also one or more common memories, one of which being the L2 cache memory 110 in fig. 2, it is possible to have many copies of any data. For example, one copy in each L1 cache memory 104, 108, and one copy in the L2 cache memory 110. A copy may also be stored in a main memory. When one copy is changed, the other copies of the changed data must be changed also to maintain coherency. The discipline that ensures that changes in the values of shared operands are propagated throughout the system is called cache coherence. Consequently, the transmission of a cache coherence invalidation message CCIM informs the receiver that data has changed and needs to be updated.

Consequently, upon reception of the cache coherence invalidation message CCIM 302 from the L2 cache memory 110, the L1 cache memory 108 invalidates the corresponding cache line in the L1 cache memory 108. Oftentimes, the corresponding L1 cache line is accessed often in situations of this kind and in general not evicted from the L1 cache memory before the software/processor has accessed the cache line in order to retrieve a response from a previous request. Further, when the notification message CCIM 302 has been transmitted from the L2 cache memory 110 to the L1 cache memory 108, the L2 cache memory 110 is updated by writing the data into the corresponding cache line of the L2 cache memory 110, step t5, as is shown in fig. 3.

In contrast to conventional solutions, the L1 cache memory 108 does not only invalidate the corresponding cache line represented by tag 202A, but also determines, step t6, whether the invalidated cache line should be subjected to a prefetch operation. According to the invention, this determination can be arranged to be performed in various ways and the determination is performed by prefetch control logic 208, fig. 2, that has been implemented in accordance with the invention and which is arranged to receive the cache coherence invalidation message CCIM 302 to determine whether a prefetch is to be performed on the basis of the cache coherence invalidation message CCIM 302.

Prefetch control logic may be already present in cache memories according to the above, but according to this aspect of the invention the logic has been amended to include further functionality. As was mentioned above, conventional prefetch algorithms that are implemented in hardware in general rely on regular access patterns to predict future accesses and/or other algorithms for predicting what data should be stored in the cache memory prior to use. The processor request for access to data such as e.g. control messages from other entities in the system, however, do not exhibit such regular patterns.

According to the present aspect of the invention, consequently, the cache coherence invalidation message CCIM 302 is, upon reception by the L1 cache memory 108, not only used by tag memory control 204 to invalidate the corresponding cache line, but the CCIM 304 is also received by prefetch control logic 208 which determines whether the invalidated cache line should be subjected to a prefetch, i.e. it is determined if the data related to the cache coherence invalidation message is to be updated prior to the data being requested by the processor 106. According to the disclosed example, the prefetch control logic 208 compares a part of the cache coherence invalidation message with a set condition.

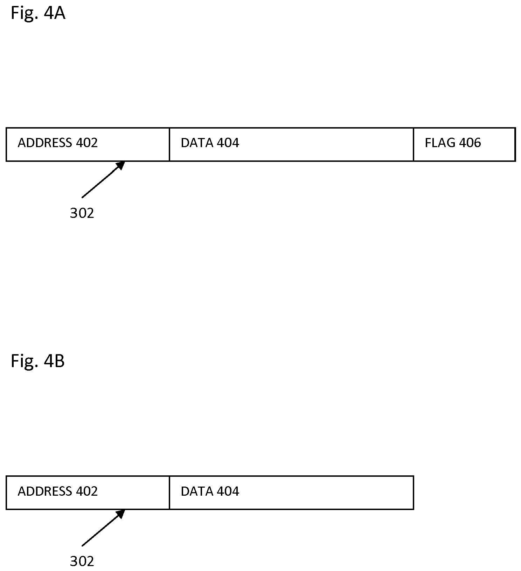

In particular, according to one aspect, it is determined whether the cache coherence invalidation message CCIM 302 fulfils a prefetch trigger condition 218, i.e. a condition that when fulfilled is used as a determination that a prefetch is to be made, and when the condition is not fulfilled, no prefetch of data associated with the invalidated cache line is performed. According to one aspect of the invention, exemplified in fig. 4A, the fulfillment of the prefetch trigger condition 218 is determined based on sideband signaling. That is, the invalidated L1 cache line is selectively prefetched on the basis of sideband signaling. Sideband signaling means that additional information is added to the cache coherence invalidation message CCIM 302. This can, for example, be accomplished by adding one or more additional bits 406, e.g. a flag bit, which can be set to a suitable value when the cache line is to be subjected to a prefetch operation, where the prefetch trigger condition 218 is fulfilled e.g. when this flag bit 406 is set. Fig. 4A shows the cache coherence invalidation message CCIM 302, where an address field 402 identifies the tag for which data is to be invalidated, a data field 404 represents any other data possibly being associated with the cache coherence invalidation message CCIM 302, and field 406 the one or more flag bits added according to this aspect of the invention.

According to this aspect of the invention, e.g. the entity transmitting the message, such as processor 102, sets the flag 406 to a predetermined value when invalidating the content of the L2 cache memory 110. The flag 406 is then relayed to cache memory 108 which determines whether a prefetch is to be performed by comparing the flag 406 with the prefetch trigger condition 218, which in this aspect is the value to which the flag should be set in order to perform a prefetch. Consequently, the sideband signaling can consist of the addition of a flag bit of the cache coherence invalidation message. It is also possible to use a plurality of bits when determining whether a prefetch trigger condition is fulfilled. Any number of bits 406 can be used as sideband signal, and one or more combinations of the one or more bits 406 can be arranged to be used as trigger condition 218 to trigger the prefetch, and the sideband signaling is forwarded from the L2 cache memory 110 to the L1 cache memory 108 as part of the cache coherence invalidation message CCIM 302.

When the L1 cache 108 concludes that a prefetch of the invalidated cache line is to be performed it first waits for some suitable period of time, shown at step t7 in fig. 3. This waiting period is not mandatory according to the invention, but can be used e.g. to ensure that the lower level memory (in this case the L2 cache memory 110) has been properly updated with the new data prior to the L1 cache 108 attempts to fetch the data.

When the waiting time has elapsed, the L1 cache memory 108 performs a prefetch of the content related to invalidated memory tag 202A by requesting the data from L2 cache memory at step t8, which according to the figure is concluded to be a cache hit, i.e. the requested data being present in L2 cache memory 110, and the relevant data is copied to a suitable cache line of the L1 cache memory 108 at step t9. The actual location of the corresponding cache line in the data memory 206 may vary during operation. That is, memory tag 202A may e.g. be arranged to correspond to any suitable location 206A, 206B,...206N in the data memory as is known per se and not discussed further herein. According to the present example it is assumed that memory tag 202A corresponds to location 206A in data memory 206. When the processor 106 then polls the L1 cache memory 108, at step t10, requesting data associated with memory tag 202A in order to retrieve a response from the processor 102 the requested data is immediately available for retrieval. This is consequently a cache hit, and data is being read by processor at step t11 so that processing can resume with minimum delay at step t12 without the need for any unnecessary latency due to slower memories being accessed. An embodiment of the invention, consequently, provides an advantageous method for prefetching data that otherwise would not be prefetched until first being requested by the processor.

According to the disclosed example, only level 1 and level 2 cache memories are used, but the invention is applicable to any level of cache memory, and any other kind of memory. In principle, the longer the access time to the memory from which data is to be prefetched, the greater the benefit of the invention will be.

The disclosed aspect of the invention where sideband signaling is used has the advantage that a minimum of change to existing hardware is required. For example, any suitable already available signal/flag supported by the processor protocol can be used to indicate a cache prefetch request.

According to one aspect of the invention, a more static solution can be used as prefetch trigger condition 218. For example, certain addresses, or address ranges, of the cache memory can be defined to always trigger a prefetch when being invalidated. According to this aspect of the invention, the prefetch control logic 208, upon reception of the cache coherence invalidation message CCIM 302, determines whether the invalidated address belongs to the one or more memory tags for which a prefetch operation is defined to occur, and when this is the case the prefetch trigger condition 218 is fulfilled and the L1 cache memory, controlled by the main cache controller 214, prefetches the data for that address. In this case, consequently, the cache coherence invalidation message CCIM 302 does not include the one or more additional flag bits 406 as in fig. 4A, but instead only consists of address (tag) 402 to be invalidated and possible further information/data 404, see fig. 4B. The prefetch control logic 208 in this case checks whether the address, or tag, 402 belongs to one or more addresses/tags for which prefetch is to be performed, and when this is the case a prefetch operation is initiated. That is, in this aspect of the invention the prefetch trigger condition is that the address being invalidated by the cache coherence invalidation message CCIM 302 belongs to one or more specific addresses being present in the tag memory 202, e.g. tag 202A.

According to the disclosed embodiment of the invention, the prefetch is exemplified as being initiated substantially immediately after the reception of the cache coherence invalidation message, subject to the waiting period mentioned above. According to one embodiment, the prefetch can, instead, be scheduled to occur at any suitable time. For example, if the L1 cache memory at present is busy the prefetch can be scheduled when the L1 cache memory is not performing other tasks. According to one embodiment of the invention, different cache memory operations can be assigned different priorities, and according to one aspect of the invention the cache prefetch operation according to the invention can be given a lower priority than e.g. the priority of the processor when the processor is requesting access to the cache memory so that the prefetch mechanism does not unnecessarily impose any undesired processor latency. Also, as is shown in fig. 2, a multiplexer 212 can be used to queue SW prefetch requests and CCIM prefetch requests according to the invention, where the requests can be suitably prioritized.

Finally, it should be understood that the invention is not limited to the embodiments described above, but also relates to and incorporates all embodiments within the scope of the appended independent claims.

## Claims

1. A device (100) for a prefetch of content to a cache memory (108, 104) comprising:
a cache memory (108, 104) for storing content;
a prefetch control logic (208) configured to generate a prefetch signal indicating that content is to be prefetched;
wherein a cache controller (214) is configured to receive the prefetch signal and to, upon receiving the prefetch signal, prefetch content from a second memory (110) to the cache memory
**characterized in that**
the prefetch control logic (208) is further configured to receive a cache coherence invalidation message, CCIM, (302), the CCIM (302) indicating content to be invalidated in the cache memory (108, 104) and to generate the prefetch signal upon receiving the CCIM (302), wherein the prefetch control logic (208) is configured to, upon receiving the CCIM (302), check, on the basis of information in the CCIM (302), whether a prefetch trigger condition is fulfilled, and if so generate the prefetch signal indicating that content is to be prefetched.

2. The device (100) according to claim 1, wherein the cache controller (214) is further configured to, upon receiving the prefetch signal, prefetch content for a possible later use by a processor from the second memory (110) to the cache memory (108, 104).

3. The device (100) according to any one of claims 1-2, wherein the prefetch control logic (208) is configured to determine if the prefetch trigger condition for triggering the prefetch is fulfilled based on information in the CCIM (302).

4. The device (100) according to claim 3, wherein the prefetch control logic (208) is further configured to compare a plurality of bits of the CCIM (302) with configured information in the prefetch control logic (208), and
wherein the prefetch trigger condition is fulfilled when the plurality of bits of the CCIM (302) corresponds to the configured information in the prefetch control logic (208).

5. The device (100) according to claim 4, wherein the configured information in the prefetch control logic (208) is one or more addresses, an address in the CCIM (302) being compared with the one or more addresses stored in the prefetch control logic (208).

6. The device (100) according to claim 5, wherein the one or more addresses constitutes one or more global addresses.

7. The device (100) according to any one of claims 1-6, wherein the prefetch control logic (208) is configured to receive the CCIM (302) comprising an additional information (406), and
wherein the prefetch control logic (208) is configured to determine if the prefetch trigger condition is fulfilled on the basis of the additional information (406).

8. The device (100) according to any one of the claims 1-7, wherein the cache controller (214) is configured to, when prefetching content to that has invalidated, wait a number of clock cycles of a processor (106, 102); and
prefetch the content when the number of clock cycles has lapsed.

9. The device (100) according to any one of claims 1-8, wherein the cache controller (214) is configured to receive from a processor a fetch signal to fetch the content for immediate use by the processor from the second memory (110) to the cache memory (108, 104).

10. The device (100) according claim 9, wherein a lower priority is assigned to the prefetching of content to a memory location (206A,206B,...,206N) invalidated by the CCIM (302) when compared to a priority of a fetch signal received from the processor.

11. A method for a prefetch content to a cache memory (108, 104) comprising a plurality of memory locations (206A,206B,...,206N) for storing content;
the method comprising:
using a prefetch control logic (208) for generating a prefetch signal indicating that content is to be prefetched; and
using a cache controller (214), for receiving the prefetch signal, and for prefetching content from a second memory (110) to the cache memory upon receiving the prefetch signal
**characterized by** receiving, by the prefetch control logic (208), a cache coherence invalidation message, CCIM, (302), the CCIM (302) indicating content to be invalidated in the cache memory (108, 104) and the generating, by the prefetch control logic (208), comprises generating the prefetch signal upon receiving the CCIM (302), the method further comprising:
using the prefetch control logic (208) for determining if a prefetch trigger condition triggering the prefetch is fulfilled based on information in the CCIM (302); and
using the cache controller (214) for prefetching the content to at least one cache location (206A,B,...,N) when the prefetch trigger condition (218) is fulfilled.

12. A method according to claim 11, wherein the cache memory (108, 104) is associated with a processor (106, 102), and wherein the content to be prefetched is delivered by an entity (102; 106; 112; 114) being different from the processor (106, 102), further comprising:
the entity (102; 106; 112; 114) being different from the processor (106, 102) indicating (t2, CCIM 304) to the second memory (110) that the content of the at least one memory location (206A,206B,...,206N) is to be invalidated;
forwarding (t3, CCIM 302) the indication to the first cache memory (108, 104) from the second memory (110);
writing (t5) the content to the second memory (110); and
prefetching (t8, t9) the content to the cache memory (106, 102) from the second memory (110).

## Patentansprüche

1. Vorrichtung (100) für einen Vorabruf von Inhalten zu einem Cache-Speicher (108, 104), die Folgendes umfasst:
einen Cache-Speicher (108, 104) zum Speichern von Inhalten;
eine Vorabruf-Steuerlogik (208), die dazu ausgelegt ist, ein Vorabrufsignal zu erzeugen, das angibt, dass Inhalte vorabzurufen sind;
wobei ein Cache-Controller (214) dazu ausgelegt ist, das Vorabrufsignal zu empfangen und, auf Empfangen des Vorabrufsignals, Inhalte von einem zweiten Speicher (110) zu dem Cache-Speicher vorabzurufen;
**dadurch gekennzeichnet, dass**
die Vorabruf-Steuerlogik (208) ferner dazu ausgelegt ist, eine Cache Coherence Invalidation Message (CCIM) (302) zu empfangen, wobei die CCIM (302) Inhalte angibt, die in dem Cache-Speicher (108, 104) zu invalidieren sind, und das Vorabrufsignal auf Empfangen der CCIM (302) zu erzeugen, wobei die Vorabruf-Steuerlogik (208) dazu ausgelegt ist, auf Empfangen der CCIM (302) auf der Basis der Informationen in der CCIM (302) zu prüfen, ob eine Vorabruf-Auslöserbedingung erfüllt ist, und wenn das der Fall ist, das Vorabrufsignal zu erzeugen, um anzugeben, dass Inhalte vorabzurufen sind.

2. Vorrichtung (100) gemäß Anspruch 1, wobei der Cache-Controller (214) ferner dazu ausgelegt ist, auf Empfangen des Vorabrufsignals Inhalte für einen möglichen späteren Gebrauch durch einen Prozessor von dem zweiten Speicher (110) zu dem Cache-Speicher (108, 104) abzurufen.

3. Vorrichtung (100) gemäß einem der Ansprüche 1-2, wobei die Vorabruf-Steuerlogik (208) dazu ausgelegt ist, auf der Basis von Informationen in der CCIM (302) zu bestimmen, ob die Vorabruf-Auslöserbedingung zum Auslösen des Vorabrufs erfüllt ist.

4. Vorrichtung (100) gemäß Anspruch 3, wobei die Vorabruf-Steuerlogik (208) ferner dazu ausgelegt ist, eine Vielzahl von Bits der CCIM (302) mit konfigurierten Informationen in der Vorabruf-Steuerlogik (208) zu vergleichen, und
wobei die Vorabruf-Auslöserbedingung erfüllt ist, wenn die Vielzahl von Bits der CCIM (302) den konfigurierten Informationen in der Vorabruf-Steuerlogik (208) entspricht.

5. Vorrichtung (100) gemäß Anspruch 4, wobei die konfigurierten Informationen in der Vorabruf-Steuerlogik (208) ein oder mehrere Adressen darstellen, wobei eine Adresse in der CCIM (302) mit den ein oder mehreren in der Vorabruf-Steuerlogik (208) gespeicherten Adressen verglichen wird.

6. Vorrichtung (100) gemäß Anspruch 5, wobei die ein oder mehreren Adressen ein oder mehrere globale Adressen darstellen.

7. Vorrichtung (100) gemäß einem der Ansprüche 1-6, wobei die Vorabruf-Steuerlogik (208) dazu ausgelegt ist, die CCIM (302), die eine zusätzliche Information (406) enthält, zu empfangen, und
wobei die Vorabruf-Steuerlogik (208) dazu ausgelegt ist, auf der Basis der zusätzlichen Information (406) zu bestimmen, ob die Vorabruf-Auslöserbedingung erfüllt ist.

8. Vorrichtung (100) gemäß einem der Ansprüche 1-7, wobei der Cache-Controller (214) beim Vorabrufen von invalidierten Inhalten dazu ausgelegt ist, eine Anzahl von Taktzyklen eines Prozessors (106, 102) abzuwarten; und
den Inhalt vorabzurufen, wenn die Anzahl von Taktzyklen abgelaufen ist.

9. Vorrichtung (100) gemäß einem der Ansprüche 1-8, wobei der Cache-Controller (214) dazu ausgelegt ist, von einem Prozessor ein Abrufsignal zu empfangen, um den Inhalt für sofortigen Gebrauch durch einen Prozessor von dem zweiten Speicher (110) zu dem Cache-Speicher (108, 104) abzurufen.

10. Vorrichtung (100) gemäß Anspruch 9, wobei dem Vorabruf von Inhalt zu einer durch die CCIM (302) invalidierten Speicherstelle (206A, 206B,..., 206N) eine niedrigere Priorität als einer Priorität eines von dem Prozessor empfangenen Abrufsignals zugewiesen wird.

11. Verfahren für einen Vorabruf von Inhalt zu einem Cache-Speicher (108, 104), der eine Vielzahl von Speicherstellen (206A, 206B,..., 206N) zum Speichern von Inhalt umfasst; wobei das Verfahren Folgendes umfasst:
Verwenden einer Vorabruf-Steuerlogik (208) zum Erzeugen eines Vorabrufsignals, das angibt, dass Inhalte vorabzurufen sind; und
Verwenden eines Cache-Controllers (214) zum Empfangen des Vorabrufsignals und zum Vorabrufen von Inhalten von einem zweiten Speicher (110) zu dem Cache-Speicher auf Empfangen des Vorabrufsignals,
**gekennzeichnet durch**
Empfangen, durch die Vorabruf-Steuerlogik (208), einer Cache Coherence Invalidation Message (CCIM) (302), wobei die CCIM (302) zu invalidierende Inhalte im Cache-Speicher (108, 104) angibt, und das Erzeugen, durch die Vorabruf-Steuerlogik (208), das Erzeugen des Vorabrufsignals auf Empfangen der CCIM (302) umfasst, wobei das Verfahren ferner Folgendes umfasst:
Verwenden der Vorabruf-Steuerlogik (208), um auf der Basis von Informationen in der CCIM (302) zu bestimmen, ob eine Vorabruf-Auslöserbedingung, die den Vorabruf auslöst, erfüllt ist; und
Verwenden des Cache-Controllers (214) zum Vorabrufen der Inhalte zu mindestens einer Cache-Stelle (206A, B,..., N), wenn die Vorabruf-Auslöserbedingung (218) erfüllt ist.

12. Verfahren gemäß Anspruch 11, wobei der Cache-Speicher (108, 104) mit einem Prozessor (106, 102) verbunden ist, und wobei die vorabzurufenden Inhalte durch eine Entität (102; 106; 112; 114) geliefert werden, die sich von dem Prozessor (106, 102) unterscheidet, wobei das Verfahren ferner Folgendes umfasst:
die Entität (102; 106; 112; 114), die sich von dem Prozessor (106, 102) unterscheidet und dem zweiten Speicher (110) angibt (t2, CCIM 304), dass der Inhalt der mindestens einen Speicherstelle (206A, 206B,..., 206N) zu invalidieren ist;
Weiterleiten (t3, CCIM 302) der Angabe zu dem ersten Cache-Speicher (108, 104) von dem zweiten Speicher (110);
Schreiben (t5) des Inhalts in den zweiten Speicher (110); und
Vorabrufen (t8, t9) des Inhalts zu dem Cache-Speicher (106, 102) von dem zweiten Speicher (110).

## Revendications

1. Dispositif (100) pour une prélecture d'un contenu dans une mémoire cache (108, 104) comprenant :
une mémoire cache (108, 104) pour stocker un contenu ;
une logique de commande de prélecture (208) configurée pour générer un signal de prélecture indiquant qu'un contenu doit être prélu ;
dans lequel un dispositif de commande de cache (214) est configuré pour recevoir le signal de prélecture et, lors de la réception du signal de prélecture, pour prélire un contenu à partir d'une seconde mémoire (110) dans la mémoire cache,
**caractérisé en ce que**
la logique de commande de prélecture (208) est en outre configurée pour recevoir un message d'invalidation de cohérence de mémoire cache (CCIM) (302), le message CCIM (302) indiquant un contenu qui doit être invalidé dans la mémoire cache (108, 104) et pour générer le signal de prélecture lors de la réception du message CCIM (302), dans lequel la logique de commande de prélecture (208) est configurée, lors de la réception du message CCIM (302), pour vérifier, sur la base d'informations dans le message CCIM (302), si une condition de déclenchement de prélecture est remplie, et, si tel est le cas, pour générer un signal de prélecture indiquant qu'un contenu doit être prélu.

2. Dispositif (100) selon la revendication 1, dans lequel le dispositif de commande de cache (214) est en outre configuré, lors de la réception du signal de prélecture, pour prélire un contenu pour une utilisation ultérieure possible par un processeur à partir de la seconde mémoire (110) dans la mémoire cache (108, 104).

3. Dispositif (100) selon l'une quelconque des revendications 1 à 2, dans lequel la logique de commande de prélecture (208) est configurée pour déterminer si la condition de déclenchement de prélecture pour déclencher la prélecture est remplie en se basant sur des informations dans le message CCIM (302).

4. Dispositif (100) selon la revendication 3, dans lequel la logique de commande de prélecture (208) est en outre configurée pour comparer une pluralité de bits du message CCIM (302) avec des informations configurées dans la logique de commande de prélecture (208), et
dans lequel la condition de déclenchement de prélecture est remplie lorsque la pluralité de bits du message CCIM (302) correspond aux informations configurées dans la logique de commande de prélecture (208).

5. Dispositif (100) selon la revendication 4, dans lequel les informations configurées dans la logique de commande de prélecture (208) sont une ou plusieurs adresses, une adresse dans le message CCIM (302) étant comparée à la ou aux adresses stockées dans la logique de commande de prélecture (208).

6. Dispositif (100) selon la revendication 5, dans lequel la ou les adresses constituent une ou plusieurs adresses globales.

7. Dispositif (100) selon l'une quelconque des revendications 1 à 6, dans lequel la logique de commande de prélecture (208) est configurée pour recevoir le message CCIM (302) comportant une information supplémentaire (406), et
dans lequel la logique de commande de prélecture (208) est configurée pour déterminer si la condition de déclenchement de prélecture est remplie sur la base de l'information supplémentaire (406).

8. Dispositif (100) selon l'une quelconque des revendications 1 à 7, dans lequel le dispositif de commande de cache (214) est configuré, lors d'une prélecture d'un contenu qui a été invalidé, pour attendre un certain nombre de cycles d'horloge d'un processeur (106, 102) ; et
pour prélire le contenu lorsque le nombre de cycles d'horloge est passé.

9. Dispositif (100) selon l'une quelconque des revendications 1 à 8, dans lequel le dispositif de commande de cache (214) est configuré pour recevoir, d'un processeur, un signal de lecture pour lire le contenu pour une utilisation immédiate par le processeur à partir de la seconde mémoire (110) dans la mémoire cache (108, 104).

10. Dispositif (100) selon la revendication 9, dans lequel une priorité plus faible est attribuée à la prélecture d'un contenu à un emplacement de mémoire (206A, 206B, ..., 206N) invalidé par le message CCIM (302) lorsqu'elle est comparée à une priorité d'un signal de lecture reçu du processeur.

11. Procédé pour un contenu de prélecture dans une mémoire cache (108, 104) comprenant une pluralité d'emplacements de mémoire (206A, 206B, ..., 206N) pour stocker un contenu ;
le procédé consistant :
à utiliser une logique de commande de prélecture (208) pour générer un signal de prélecture indiquant qu'un contenu doit être prélu ; et
à utiliser un dispositif de commande de cache (214) pour recevoir le signal de prélecture et pour prélire un contenu à partir d'une seconde mémoire (110) dans la mémoire cache lors de la réception du signal de prélecture,
**caractérisé en ce qu'**il consiste
à recevoir, au moyen de la logique de commande de prélecture (208), un message d'invalidation de cohérence de mémoire cache (CCIM) (302), le message CCIM (302) indiquant un contenu qui doit être invalidé dans la mémoire cache (108, 104) et la génération, par la logique de commande de prélecture (208), consiste à générer le signal de prélecture lors de la réception du message CCIM (302), le procédé consistant en outre :
à utiliser la logique de commande de prélecture (208) pour déterminer si une condition de déclenchement de prélecture déclenchant la prélecture est remplie en se basant sur des informations dans le message CCIM (302) ; et
à utiliser le dispositif de commande de cache (214) pour prélire le contenu à au moins un emplacement de cache (206A, B, ..., N) lorsque la condition de déclenchement de prélecture (218) est remplie.

12. Procédé selon la revendication 11, dans lequel la mémoire cache (108, 104) est associée un processeur (106, 102) et dans lequel le contenu qui doit être prélu, est délivré par une entité (102 ; 106 ; 112 ; 114) qui est différente du processeur (106, 102), comprenant en outre :
l'entité (102 ; 106 ; 112 ; 114) qui est différente du processeur (106, 102) indiquant (t2, CCIM 304) à la seconde mémoire (110) que le contenu du ou des emplacements de mémoire (206A, 206B, ..., 206N) doit être invalidé ;
la transmission (t3, CCIM 302) de l'indication à la première mémoire cache (108, 104) à partir de la seconde mémoire (110) ;
l'écriture (t5) du contenu dans la seconde mémoire (110) ; et
la prélecture (t8, t9) du contenu dans la mémoire cache (106, 102) à partir de la seconde mémoire (110).
